# EUROPEAN PATENT SPECIFICATION

(11) **EP 2 196 124 B1**
(45) Date of publication and mention of the grant of the patent: **18.09.2013**
(21) Application number: 09178178.1
(22) Date of filing: 07.12.2009
(51) Int. Cl.: A47K 11/02, C05F 3/04, C05F 3/06

(54) **Composting toilet and a method for maintaining it**
Komposttoilette und Verfahren zur Aufrechterhaltung derselben
Toilette a compostage et procédé de maintien de celui-ci

(30) Priority: 11.12.2008 FI 20086185
(43) Date of publication of application: 16.06.2010
(73) Proprietor: KEKKILÄ OY, 01510 Vantaa (FI)
(72) Inventor: Kanervo, Janne, FI-08150 LOHJA (FI)
(74) Representative: Helke, Kimmo Kalervo

(56) References cited:
- WO-A1-02/17764
- WO-A1-90/02720
- WO-A1-98/25866
- FR-A1- 2 581 105
- GB-A- 2 116 220
- US-A- 5 317 764
- US-A1- 2003 167 562
- US-B1- 6 393 627
- DATABASE EPODOC EUROPEAN PATENT OFFICE, THE HAGUE, NL; 3 March 2003 (2003-03-03), XP002572153 Database accession no. NO20014247 -& NO 318 293 B1 (FRIDLUND ERNST HAAKON [NO] FRIDLUND ERNST HAKON [NO]) 28 February 2005 (2005-02-28) & Frindlung Plast & Bat: "Naturdo'n. Biologiske toalettsystemer for hytter"[Online] Retrieved from the Internet: URL:www.fridlungplast.no/patent.htm> [retrieved on 2010-03-09]
- DATABASE EPODOC EUROPEAN PATENT OFFICE, THE HAGUE, NL; 18 October 2006 (2006-10-18), XP002572154 Database accession no. cn2827242Y -& CN 2 827 242 Y (AN NEW TECH DEV CO LTD ZHEJIAN [CN]) 18 October 2006 (2006-10-18)

## Description

### FIELD OF THE INVENTION

The object of the invention is a composting latrine and a method for maintaining thereof. In particular, the object of the invention is that what is disclosed in the claims.

### BACKROUND OF THE INVENTION

Specially, composting latrines, which are mounted in a particular lavatory building, are used in recreational dwellings. Typically, liquid and solid waste is separated in the composting latrine, from which the liquid waste is evaporated and the solid waste is composted. The composting of the solid waste can take place in the latrine or in a separate composting room. Conventionally, the solid waste is collected in a container, which is emptied by taking the container away from a latrine apparatus from the rear of the latrine.

Some disadvantages are present in latrine solutions accordant with prior art. Removing of a full container from the latrine and emptying to a composter is difficult, and contamination of clothes and environment is easily caused by the handling of the waste in connection with the maneuver. In addition, the waste container has to be cleaned before reusing it. Besides, this kind of handling of the uncomposted waste is often unpleasant. In some solutions the composting is taking place in the same container, to which the waste is collected, but also in that case the displacement of the waste container to a particular composting room is required, i.e. the full waste container has to be handled outside of the latrine. If the composting container were in the same space with the collecting container, the container would easily be on each other's way, when the containers are displaced/replaced.

In addition, there are solutions, in which a container comprised of several compartments is used, in which case waste is collected to one compartment and pursuance of the composting is taking place in another compartment (e.g. WO98/25866A1, FR 2 581 105 and NO318293) However, this kind of solution requires a great space from the latrine apparatus, as well as complicated mechanical arrangement to be used in turning the container, by means of which the places of the compartments can be changed when the collecting compartment is fulfull. This kind of arrangement gets easily damaged due to contamination, in which case the use thereof is hard or impossible. Additionally, the emptying of the composted matter is often difficult, as well as cleaning of the compartment after emptying. Documents US 2003/167562 A1 and US 6393 627 B1 present portable restroom facilities having housing, which has a door opening for entering and exiting the housing.

### SUMMARY OF THE INVENTION

The objective of the invention is to improve the usability of composting latrines by introducing a composting latrine, by means of which the foregoing problems can be alleviated or eliminated. Thus, one object of the invention is to create a solution, wherein the uncomposted waste does not have to be handled outside of the latrine, and wherein the maneuvers related to the emptying are easily performed.

The objects of the invention are achieved with a solution, as described in claim 1 wherein two containers are locatable in the inner space of the latrine, one of which is used for collecting solid waste and the other container is used for composting the collected waste. It is is possible to locate an empty container in the inner space of the latrine through the opening in front of the latrine, and the container containing at least partially composted waste is removable from the latrine's other opening. The container, to which is collected a waste, is displaceable to the place of the removed container containing composted waste without removing said container from the latrine.

A composting latrine according to the invention, which composting latrine comprises means for evaporating liquid waste and means for composting solid waste, as described in claim 1 comprises:
- a second opening (15) at the rear of the latrine, which is equipped with a second openable lid (50), through which the second opening the container (20a, 20b) located in the second space is removable from the latrine,
- a substantially horizontal sliding surface (34a, 34b), along which and supported by which the container is displaceable from the first section of the space to the second section,
in which case the container (20a) located in the first section (12a) of the space (12) is displaceable to the second section (12b) of the space without removing the container from the said continuous space (12).

A method for maintaining the composting, latrine according to claim 1 is characterized in that the method as described in claim 8 comprises at least following steps:
- an empty first container is positioned in the first section of the space for containers of the latrine through the first opening in front of the latrine,
- when the first container is full it is displaced along and supported by a substantially horizontal sliding surface from the first section of the space for the containers of the latrine to the second section while the container is in the said space during the displacement (82),
- an empty second container is positioned to the first section of the space for containers of the latrine through the first opening in front of the latrine (83),
- when the waste in the first container is at least partially composted, the first container is removed from the latrine through the second opening at the rear of the latrine (84).

In one embodiment, the first opening, through which the empty container can be positioned in the latrine, is located in the upper part in front of the latrine, and the lid covering the opening acts also as a seat part of the latrine. In addition, the lid can have a lead for leading liquid waste to the bottom part of the latrine, past the collecting container.

The second opening is located in the rear of the latrine, in which case the latrine can be mounted to the lavatory building so that the opening at the rear of the latrine is outside of the back wall of the lavatory building.

In another embodiment, the latrine comprises an evaporating plate for evaporating liquid waste. The evaporating plate is preferably detachable for cleaning.

Various preferred embodiments of the invention are also disclosed in the dependent claims.

Significant advantages are achieved by means of the invention. When the collecting container is full, it is easily displaced to the other section of the space for containers in order to composting without requiring the handling of the waste container outside of the latrine. While using the same container both for collecting and for composting, the removing of the waste from one container to the other is avoided. In addition, it is not necessary to clean the waste container prior to waste composting. The empty container is placed in the latrine through the opening in front thereof, thus the other, full container, is not then on the way of the placing of the empty container. Moreover, the advantage of the invention is that it is implementable to a very small space.

In this patent application the expression "latrine" is meant a latrine apparatus and the latrine does not include a lavatory building.

In this patent application it is meant by the expression "composted" waste that the waste is at least partially composted, but it may require further composting before utilization.

### BRIEF DESCRIPTION OF THE DRAWINGS

Next the invention is described in more detail with reference to the appended drawings, in which
- Fig. 1: depicts, as a cutaway, a latrine according to the invention,
- Fig. 2: depicts a container of the latrine according to the invention,
- Fig. 3: depicts an evaporating plate of the latrine according to the invention,
- Fig. 4: depicts an opening of the lid in front of the latrine according to the invention,
- Fig. 5: depicts a placing of a container in the latrine according to the invention,
- Fig. 6: depicts a removing of a container in the latrine according to the invention,
- Fig. 7: depicts a mounting of the latrine according to the invention to a lavatory building and
- Fig.8: depicts as a flow chart a method according to the invention for maintaining the latrine.

### DETAILED DESCRIPTION OF THE INVENTION

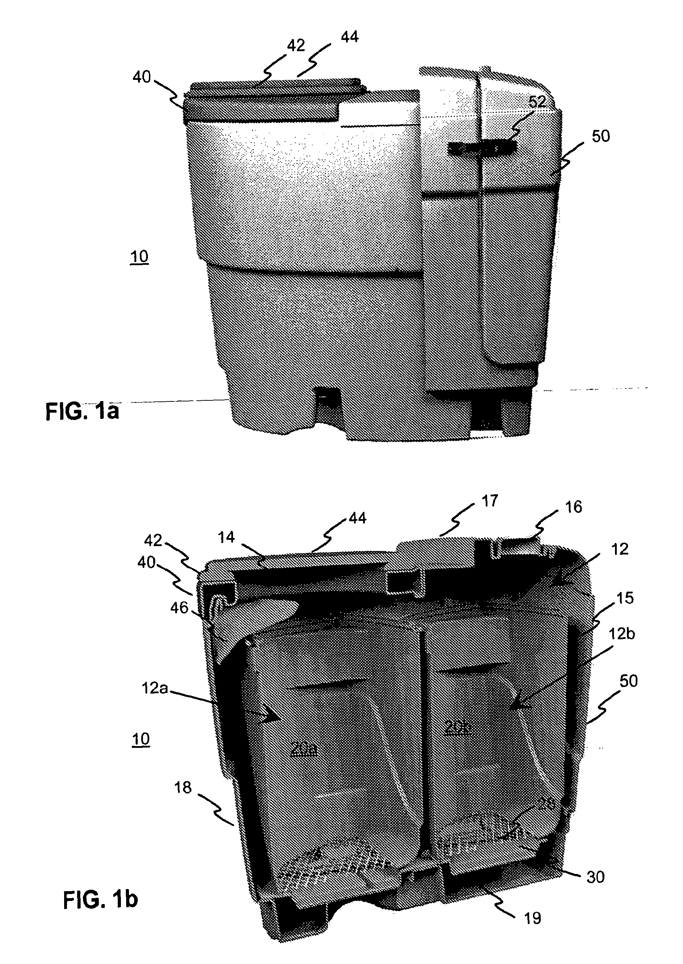

Fig. 1a depicts a side view of a latrine 10 according to the invention, and Fig. 1b depicts a cutaway of that latrine. The latrine comprises an inner space 12 defined by walls 18, bottom 19 and upper part 17. In the inner space 12 there are a first section 12a, where is placed a container 20a, and a second section 12b, where is placed a container 20b. An opening 14 in front of the latrine belongs to the structure of the latrine, through which opening a container can be located in the first section 12a of the inner space. The opening 14 is covered with an openable lid 40, which has a seat part 42 of the latrine and a hinged protective cover 44. Respectively, there is a second opening 15 at the rear of the latrine, through which second opening the container 20b located in the second space of the inner space can be removed from the latrine. When the said container is removed, the container located in the first section can be displaced to the second section through the same opening at the rear of the latrine for composting the waste. An openable lid 50 belongs to the opening 15 at the rear of the latrine.

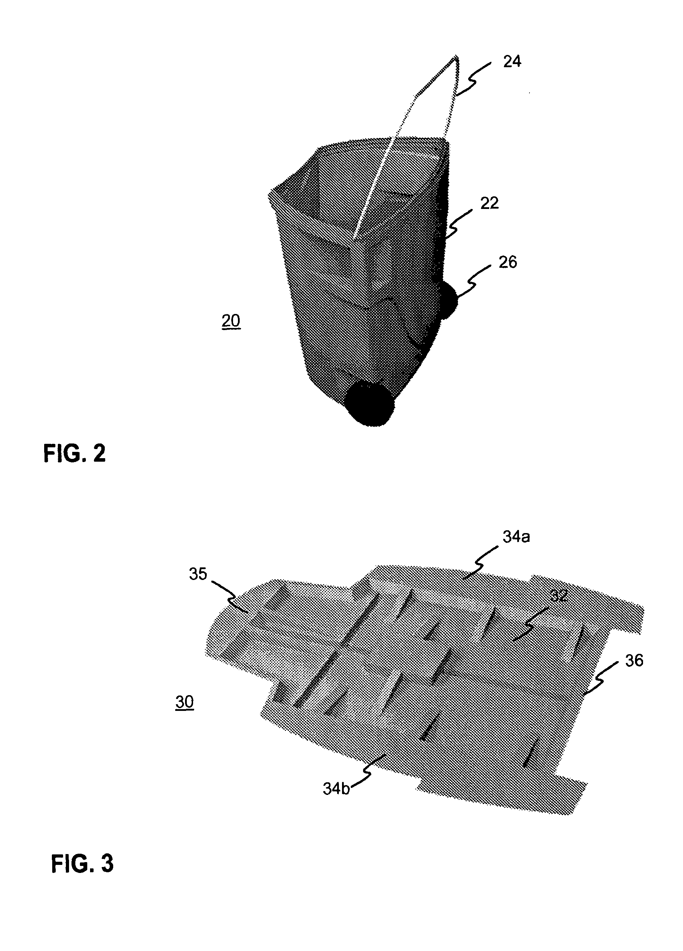

In Fig. 2 is depicted an exemplary container 20, which can be used in the latrines depicted in Figs. 1a and 1b. In addition to the actual container part 22, casters 26 and a grip 24, with which the container is easy to transfer/move, belong to the container.

In the latrine solid waste is collected in the container 20a in the first section 12a. Liquid waste is led, by means of a lead 46, past the container 20a to the lower part of the latrine. The lead belongs to a preferably detachable lid part 40, in which case, when the lid part is removed the lead departs with the lid part. In this way, the container will fit to its place in the inner space through the opening 14. In addition, the container has a gridded bottom 28, through which the liquid waste gets to flow to the bottom of the latrine.

In the bottom of the latrine there is an evaporating plate 30, to which the waste is led at first. An exemplary evaporating plate is depicted more specifically in Fig. 3. If there is greater amount of waste, a part of it is further led to the bottom 19 of the latrine. Using both the evaporating plate and the bottom part, a wider evaporating surface is achieved than if the liquid waste is lead straight to the bottom part. For the ventilation of the inner space of the latrine, there is a joint 16 in the upper part of the latrine for a vent pipe.

In the evaporating plate 30 depicted in Fig. 3, the front of the evaporating plate is denoted with reference number 35 and the rear with reference number 36. In figure can be seen sliding surfaces 34a and 34b, supporting of which the container can be easily displace from the first section, i.e. the front section, of the inner space of the latrine to the second section, i.e. the rear section.

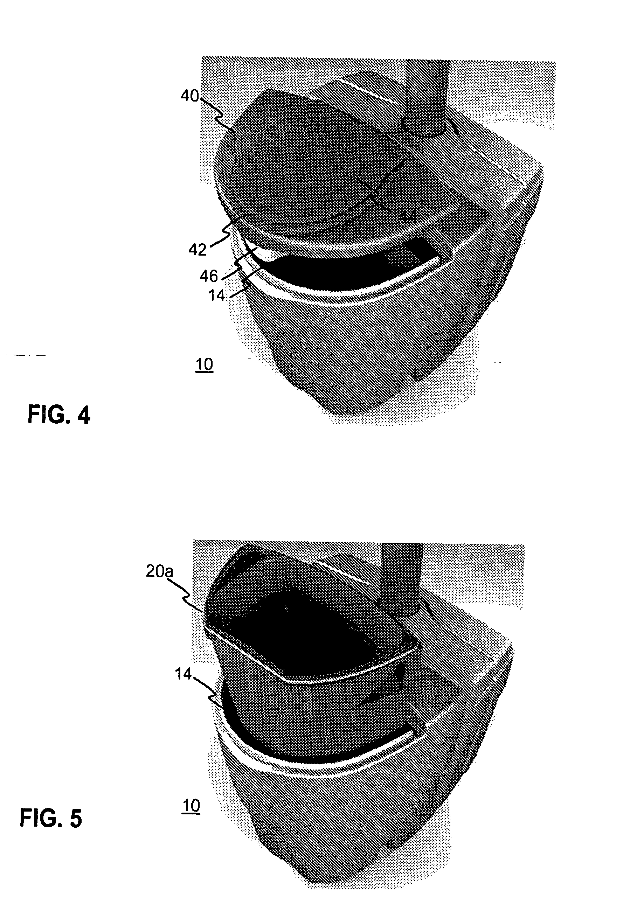

Fig. 4 depicts how the exemplary lid 40 of the latrine 10 is detachable upon the first opening 14 in front of the latrine. The seat part 42 equipped with a hole, the hinged protective cover 44 and the lead 46 for liquid belong to the lid 40.

Fig. 5 depicts how the container 20a can be positioned in the first section of the inner space through the first opening 14 in front of the latrine 10, when the lid 40 is detached.

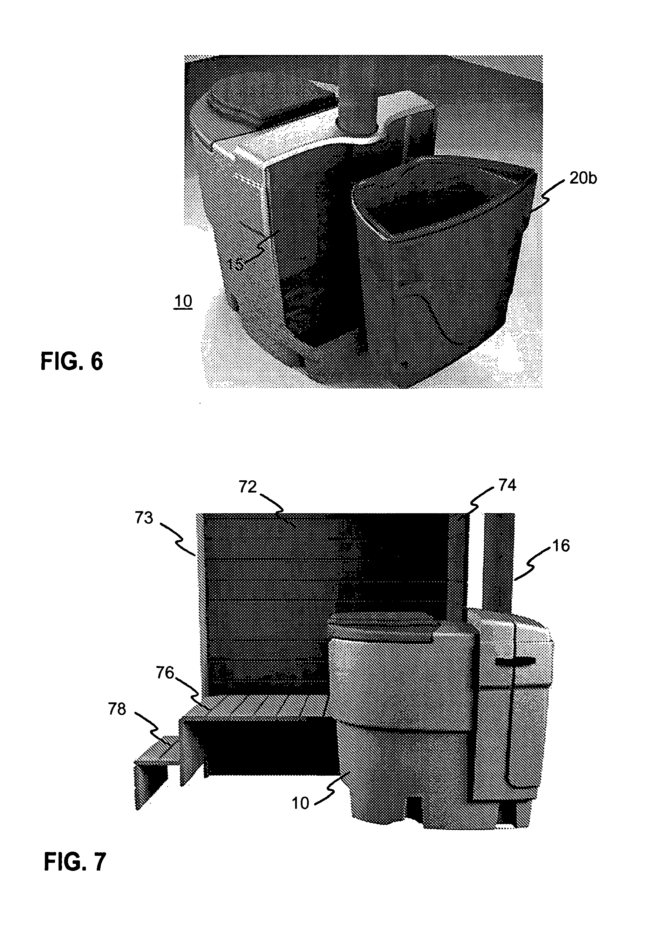

Fig. 6 depicts how the container 20b can be removed from the second section of the inner space through the second opening 15 in the rear of the latrine 10, when the lid 50 is detached.

Fig. 7 depicts an exemplary latrine 10 according to the invention mounted in the lavatory building. The lavatory building is depicted in the figure as a cutaway. The lavatory building comprises side walls 72, a front wall 73 equipped with a door, a rear wall 74 and a floor 76. The floor of the lavatory is raised so that the toilet seat may be suitable height over the floor. There are stairs 78 in the entry for walking to the raised floor. In Fig. 7 is seen that the latrine apparatus 10 is mounted so that the front of the latrine is inside the lavatory building and the rear of the latrine is outside the lavatory building. Since the rear of the latrine is located outside of the lavatory building's wall, the containers are easy to remove/displace from the opening at the rear of the latrine outside the lavatory building. In addition, the vent pipe 16 of the latrine apparatus will be easily mounted outside the latrine.

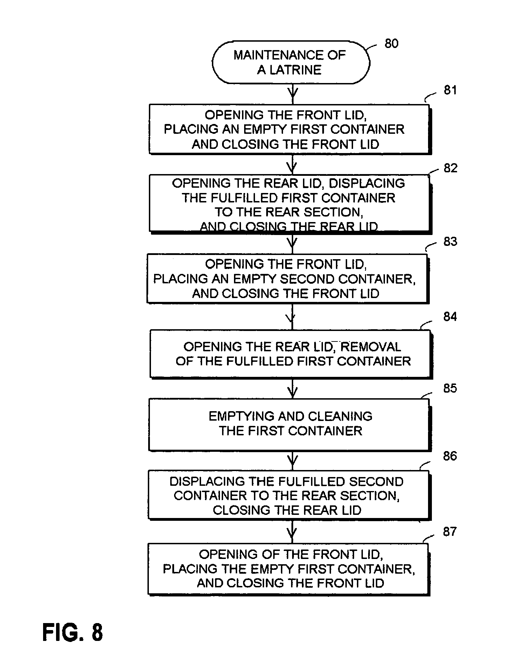

Fig. 8 depicts as a flow chart a method 80 according to the invention for maintaining the composting latrine. At first, at step 81, the front lid in front of the latrine is opened/detached. The empty first container is placed, through the opened opening, in the first section of the inner space of the latrine, in this case in the front section of the inner space. After this the opening is closed with the first lid. When the first container is full with waste, at step 82, the lid in the rear section is opened and so, through the opened second opening, the first container is displaced from the first section of the inner space to the other section, in the present case, to the rear of the inner space. After this, the rear lid is closed. Further, at step 83, the front lid is opened and the empty second container is placed in front of the inner space of the latrine for collecting waste. After that the front lid is closed for the use.

When the second container is full, at step 84, the first container is removed from the latrine. At this time, the waste in the first container is, at least partially, composted. For the removal the rear lid is detached. The composted waste is emptied from the removed first container and the container is cleaned, at step 85. At step 86, the second container is drawn displaced to the rear section of the inner space from the opening at the rear of the latrine for composting the waste in the container. After that the rear lid is closed. At step 87, the front lid is opened and the first container is placed in the front section of the inner space of the latrine. Finally, the front lid is closed. After this, above described steps 84-87 are repeated. It should be noted, that the maintaining of the latrine may comprise the removal, cleaning and setting back of the evaporating plate. The maintenance may also comprise other cleaning maneuvers.

Above are described only some of the embodiments according to the invention. The principle according to the invention can naturally be modified within the scope defined by claims in the details of implementation and practices of use, for example.

In the embodiment described above, the first opening, through which the container can be placed in the inner space of the latrine, is located in the front part of the latrine in its upper part. It is also possible that the opening is located in the front wall in front of the latrine, in which case there is an openable/detachable lid part in the front wall. In this case, the seat part of the latrine, if desired, may be fixedly affixed to the upper part of the latrine.

In the embodiment described above, the first section and the second section of the inner space of the latrine are located successively, so that the first part is in the front part of the latrine and the second section is in the rear part of the latrine. This is preferable solution, because in that case the container comprising composted waste can be removed from the rear of the lavatory building. However, it is also possible to implement the invention, so that the first section and the second section of the inner space are located side by side, for example. In this case, the full container in the first section is displaced to the other section by displacing the container in sideward. The container, which comprises composted waste, located in the second section of the inner space, can thus be removed from the opening at the rear of the latrine outside of the latrine, or alternatively, from the opening in front of the latrine from inside the latrine.

In the embodiment described above, the evaporating plate supports the weight of the containers and the sliding surface for displacing the container in the inner space is located on the evaporating plate. However, it is possible that the evaporating plate is narrower or there is no evaporating plate at all. It this case, the bottom the latrine may support the weight of the containers and the said sliding surface may locate in the bottom of the latrine.

## Claims

1. A composting latrine (10), which comprises means for evaporating liquid waste and means for composting solid waste, wherein the latrine comprises:
- a first container (20a) and a second container (20b),
- a continuous space (12) for the first container and the second container, which space comprises a first section (12a) and a second section (12b), in which case the container (20a) located in the first section of the space is arranged to collect solid waste and the container (20b) located in the second section of the space is arranged to compost the solid waste collected thereto, and
- a first opening (14) in front of the latrine, which opening is equipped with a first openable lid (40), through which the first opening the container (20a, 20b) is locatable in the first space,
**characterized in that** the latrine further comprises
- a second opening (15) at the rear of the latrine, which is equipped with a second openable lid (50), through which the second opening the container (20a, 20b) located in the second space is removable from the latrine,
- a substantially horizontal sliding surface (34a, 34b), along which and supported by which the container is displaceable from the first section of the space to the second section,
in which case the container (20a) located in the first section (12a) of the space (12) is displaceable to the second section (12b) of the space without removing the container from the said continuous space (12).

2. A composting latrine according to claim 1, **characterized in that** it comprises a bottom (19) for collecting and evaporating liquid waste.

3. A composting latrine according to claim 2, **characterized in that** it comprises a bottom (19) and a substantially horizontal evaporating plate (30) between the said first and the second container (20a, 20b) for collecting and evaporating liquid waste.

4. A composting latrine according to claim 3, **characterized in that** said evaporating plate (30) comprises said sliding surface (34a, 34b).

5. A composting latrine according to any preceding claim, **characterized in that** the first opening (14) is located in the upper part of the latrine.

6. A composting latrine according to any preceding claim, **characterized in that** the first openable (40) lid comprises a seat part (42) of the latrine.

7. A composting latrine according to any preceding claim, **characterized in that** the first openable lid (40) comprises a leading part (46) for leading the liquid waste to the evaporating plate located in the lower part of the latrine.

8. A method for maintaining the composting latrine according to claim 1, **characterized in that** the method comprises at least following steps:
- an empty first container is positioned in the first section of the space for containers of the latrine through the first opening in front of the latrine (81, 87),
- when the first container is fulfilled, it is displaced along and supported by a substantially horizontal sliding surface from the first section of the space for the containers of the latrine to the second section while the container is in the said space during the displacement (82),
- an empty second container is positioned to the first section of the space for containers of the latrine through the first opening in front of the latrine (83),
- when the waste in the first container is at least partially composted, the first container is removed from the latrine through the second opening at the rear of the latrine (84).

## Patentansprüche

1. Kompostiertoilette (10) mit Mitteln zum Verdunsten flüssigen Abfalls und Mitteln zum Kompostieren festen Abfalls, welche umfasst:
- einen ersten Behälter (20a) und einen zweiten Behälter (20b),
- einen zusammenhängenden Raum (12) für den ersten und den zweiten Behälter, welcher Raum einen ersten Teil (12a) und einen zweiten Teil (12b) aufweist, wobei der im ersten Teil des Raums angeordnete Behälter (20a) zur Aufnahme festen Abfalls und der im zweiten Teil des Raums angeordnete Behälter (20b) zum Kompostieren des darin angesammelten festen Abfalls eingerichtet ist, und
- eine am Vorderteil der Toilette befindliche erste Öffnung (14) mit einem ersten zu öffnenden Deckel (40), durch welche erste Öffnung der Behälter (20a, 20b) in den ersten Raum gebracht werden kann,
**dadurch gekennzeichnet, dass** die Toilette weiter:
- eine hinten an der Toilette befindliche zweite Öffnung (15) mit einem zweiten zu öffnenden Deckel (50), durch welche zweite Öffnung hindurch der im zweiten Raum angeordnete Behälter (20a, 20b) aus der Toilette entfernt werden kann, und
- eine im Wesentlichen waagrechte Gleitfläche (34a, 34b), auf der und von der gestützt der Behälter aus dem ersten Teil des Raums in den zweiten Teil der Raums verlagert werden kann, umfasst,
wobei der im ersten Teil (12a) des Raums (12) befindliche Behälter (20a) in den zweiten Teil (12b) des Raums verlagert werden kann ohne dass der Behälter dabei aus dem besagten zusammenhängenden Raum (12) herausgenommen zu werden braucht.

2. Kompostiertoilette nach Anspruch 1, **dadurch gekennzeichnet, dass** sie einen Boden (19) zum Sammeln und Verdunsten flüssigen Abfalls aufweist.

3. Kompostiertoilette nach Anspruch 2, **dadurch gekennzeichnet, dass** sie eine zwischen dem Boden (19) und dem besagten ersten und zweiten Behälter (20a, 20b) befindliche, im Wesentlichen waagrechte Verdunstungsplatte (30) zum Sammeln und Verdunsten flüssigen Abfalls umfasst.

4. Kompostiertoilette nach Anspruch 3, **dadurch gekennzeichnet, dass** die besagte Verdunstungsplatte (30) die besagte Gleitfläche (34a, 34b) aufweist.

5. Kompostiertoilette nach irgendeinem der vorangehenden Ansprüche, **dadurch gekennzeichnet, dass** sich die erste Öffnung (14) am Oberteil der Toilette befindet.

6. Kompostiertoilette nach irgendeinem der vorangehenden Ansprüche, **dadurch gekennzeichnet, dass** der erste zu öffnende (40) Deckel das Sitzteil (42) der Toilette umfasst.

7. Kompostiertoilette nach irgendeinem der vorangehenden Ansprüche, **dadurch gekennzeichnet, dass** der erste zu öffnende Deckel (40) ein Leitteil (46) zum Leiten des flüssigen Abfalls zu der im Unterteil der Toilette befindlichen Verdunstungsplatte hin umfasst.

8. Verfahren zur Wartung der Kompostiertoilette nach Anspruch 1, **dadurch gekennzeichnet, dass** das Verfahren wenigstens die folgenden Stufen umfasst:
- Einbringen des leeren ersten Behälters durch die im Vorderteil der Toilette befindliche erste Öffnung hindurch in den ersten Teil des Behälterraums (81, 87);
- Wenn der erste Behälter gefüllt ist Verbringen desselben, gestützt auf die im Wesentlichern waagrechte Gleitfläche, aus dem ersten Teil des Behälterraums der Toilette in den zweiten Teil, wobei sich der Behälter während dieses Transports in dem besagten Raum befindet (82);
- Einbringen des leeren zweiten Behälters durch die am Vorderteil der Toilette befindliche erste Öffnung hindurch in den ersten Teil des Behälterraums der Toilette (83);
- Nach wenigstens teilweiser Kompostierung des im ersten Behälter befindlichen Abfalls Entfernen des ersten Behälters aus der Toilette durch die am Hinterteil der Toilette befindliche zweite Öffnung hindurch (84).

## Revendications

1. Toilette à compost (10), qui comprend des moyens pour faire évaporer des déchets liquides et des moyens pour composter des déchets solides, laquelle toilette comprend :
- un premier récipient (20a) et un deuxième récipient (20b),
- un espace continu (12) pour le premier récipient et le deuxième récipient, lequel espace comprend une première section (12a) et une deuxième section (12b), et le récipient (20a) placé dans la première section de l'espace est disposé de sorte à recueillir des déchets solides et le récipient (20b) placé dans la deuxième section de l'espace est disposé de sorte composter les déchets solides recueillis dans ce dernier, et
- une première ouverture (14) à l'avant de la toilette, laquelle ouverture est équipée d'un premier couvercle ouvrable (40), via laquelle première ouverture le récipient (20a, 20b) peut être placé dans le premier espace,
**caractérisée en ce que** la toilette comprend en outre
- une deuxième ouverture (15) à l'arrière de la toilette, laquelle ouverture est équipée d'un deuxième couvercle ouvrable (50), via laquelle deuxième ouverture le récipient (20a, 20b) peut être sorti de la toilette,
- une surface de glissement (34a, 34b) essentiellement horizontale, le long de laquelle et soutenu par laquelle le récipient peut être déplacé de la première section de l'espace à la deuxième section,
dans quel cas le récipient (20a) placé dans la première section (12a) de l'espace (12) peut être déplacé dans la deuxième section (12b) de l'espace sans sortir le récipient dudit espace continu (12).

2. Toilette à compost selon la revendication 1, **caractérisée en ce qu'**elle comprend un fond (19) pour recueillir et faire évaporer les déchets liquides.

3. Toilette à compost selon la revendication 2, **caractérisée en ce qu'**elle comprend un fond (19) et une plaque d'évaporation (30) essentiellement horizontale entre lesdits premier et deuxième récipient (20a, 20b) pour recueillir et faire évaporer les déchets liquides.

4. Toilette à compost selon la revendication 3, **caractérisée en ce que** ladite plaque d'évaporation (30) comprend ladite surface de glissement (34a, 34b).

5. Toilette à compost selon l'une quelconque des revendications précédentes, **caractérisée en ce que** la première ouverture (14) est située dans la partie supérieure de la toilette.

6. Toilette à compost selon l'une quelconque des revendications précédentes, **caractérisée en ce que** le premier couvercle ouvrable (40) comprend la partie siège (42) de la toilette.

7. Toilette à compost selon l'une quelconque des revendications précédentes, **caractérisée en ce que** le premier couvercle ouvrable (40) comprend une partie de guidage (46) pour diriger les déchets liquides jusqu'à la plaque d'évaporation située dans la partie inférieure de la toilette.

8. Méthode pour entretenir la toilette à compost selon la revendication 1, **caractérisée en ce que** la méthode comprend au moins les étapes suivantes:
- un premier récipient vide est placé dans la première section de l'espace de la toilette prévu pour les récipients via la première ouverture à l'avant de la toilette (81, 87),
- lorsque le premier récipient est rempli, il est déplacé le long de et soutenu par la surface de glissement essentiellement horizontale de la première section de l'espace de la toilette prévu pour les récipients à la deuxième section, le récipient étant dans ledit espace pendant le déplacement (82),
- un deuxième récipient vide est placé dans la première section de l'espace de la toilette prévu pour les récipients via la première ouverture à l'avant de la toilette (83),
- une fois que les déchets dans le premier récipient sont au moins partiellement compostés, le premier récipient est sorti de la toilette via la deuxième ouverture à l'arrière de la toilette (84).
